(19) Europäisches Patentamt / European Patent Office / Office européen des brevets

(11) **EP 4 379 606 A1**

(12) **EUROPEAN PATENT APPLICATION**

(43) Date of publication:
**05.06.2024 Bulletin 2024/23**

(21) Application number: **22210758.3**

(22) Date of filing: **01.12.2022**

(51) International Patent Classification (IPC):
**G06N 3/0455** $^{(2023.01)}$    **G06N 3/088** $^{(2023.01)}$
**G06N 3/096** $^{(2023.01)}$    **G06F 40/30** $^{(2020.01)}$

(52) Cooperative Patent Classification (CPC):
**G06N 3/0455; G06F 40/30; G06N 3/088;
G06N 3/096;** G06F 40/40

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Bayer AG**
**51373 Leverkusen (DE)**

(72) Inventor: **Dietrich, Jürgen**
**51373 Leverkusen (DE)**

(74) Representative: **BIP Patents**
**c/o Bayer Intellectual Property GmbH
Alfred-Nobel-Straße 50
40789 Monheim am Rhein (DE)**

(54) **FRACTIONAL STRATIFIED CROSS VALIDATION**

(57)    Systems, methods, and computer programs disclosed herein relate to the evaluation of training data for training machine learning models.

Fig. 1

EP 4 379 606 A1

**Description**

FIELD

Systems, methods, and computer programs disclosed herein relate to the evaluation of training data for training machine learning models.

BACKGROUND

Training data is required to train machine learning models. Machine learning models can only be as good as the training data used to train them. In other words: high-quality data is essential for high-quality machine learning models.
There are several methods to check the quality of the data and to test the performance of a machine learning model.
One aspect of this is the sufficiency of the training data. Training data is sufficient if no other data is needed to train a machine learning model for a particular task (e.g., a classification or regression task). If the training data is sufficient, further training data does not lead to higher performance of the machine learning model.

SUMMARY

The present disclosure provides means for determining the sufficiency of training data.
In a first aspect, the present disclosure relates to a computer-implemented method comprising the steps:

- receiving and/or providing a machine learning model,

- receiving and/or providing an initial dataset for training and validating the machine learning model, the initial dataset comprising a number $M$ of records, each record of at least a portion of the number of records being related to one or more aspects of a number $N$ of aspects, wherein for each aspect $A_i$ there is a relative frequency $f_i$ indicating how often the aspect is represented in the initial dataset, wherein i is an index that runs through the integers from 1 to $N$,

- generating one or more sets of training data and validation data from the initial dataset, wherein each aspect is represented in each set with the same relative frequency as in the initial dataset,

- training a number of copies of the machine learning model on fractions of different sizes of the one or more training data sets, wherein each aspect is represented in each fraction with the same relative frequency as in the initial dataset,

- determining performance of each copy of the machine learning model, optionally with respect to a selected aspect,

- determining if the performance of the copies of the machine learning model reaches saturation with increasing size of the fractions and outputting a message about the saturation, and/or outputting the performance of the copies as a function of the size of fractions.

In another aspect, the present disclosure provides a computer system comprising:

a processor; and

a memory storing an application program configured to perform, when executed by the processor, an operation, the operation comprising:

- receiving and/or providing a machine learning model,

- receiving and/or providing an initial dataset for training and validating the machine learning model, the initial dataset comprising a number $M$ of records, each record of at least a portion of the number of records being related to one or more aspects of a number $N$ of aspects, wherein for each aspect $A_i$ there is a relative frequency $f_i$ indicating how often the aspect is represented in the initial dataset, wherein i is an index that runs through the integers from 1 to $N$,

- generating one or more sets of training data and validation data from the initial dataset, wherein each aspect is represented in each set with the same relative frequency as in the initial dataset,

- training a number of copies of the machine learning model on fractions of different sizes of the one or more training data sets, wherein each aspect is represented in each fraction with the same relative frequency as in the initial dataset,

- determining performance of each copy of the machine learning model, optionally with respect to a selected aspect,

- determining if the performance of the copies of the machine learning model reaches saturation with increasing size of the fractions and outputting a message about the saturation, and/or outputting the performance of the copies as a function of the size of fractions.

In another aspect, the present disclosure provides a non-transitory computer readable storage medium having stored thereon software instructions that, when executed by a processor of a computer system, cause the computer system to execute the following steps:

- receiving and/or providing a machine learning model,

- receiving and/or providing an initial dataset for training and validating the machine learning model, the initial dataset comprising a number $M$ of records, each record of at least a portion of the number of records being related to one or more aspects of a number $N$ of aspects, wherein for each aspect $A_i$ there is a relative frequency $f_i$ indicating how often the aspect is represented in the initial dataset, wherein i is an index that runs through the integers from 1 to $N$,

- generating one or more sets of training data and validation data from the initial dataset, wherein each aspect is represented in each set with the same relative frequency as in the initial dataset,

- training a number of copies of the machine learning model on fractions of different sizes of the one or more training data sets, wherein each aspect is represented in each fraction with the same relative frequency as in the initial dataset,

- determining performance of each copy of the machine learning model, optionally with respect to a selected aspect,

- determining if the performance of the copies of the machine learning model reaches saturation with increasing size of the fractions and outputting a message about the saturation, and/or outputting the performance of the copies as a function of the size of fractions.

Preferred embodiments are defined in the dependent claims, the description, and the drawings.

DETAILED DESCRIPTION

The invention will be more particularly elucidated below without distinguishing between the aspects of the invention (method, computer system, computer-readable storage medium). On the contrary, the following elucidations are intended to apply analogously to all the aspects of the invention, irrespective of in which context (method, computer system, computer-readable storage medium) they occur.
If steps are stated in an order in the present description or in the claims, this does not necessarily mean that the invention is restricted to the stated order. On the contrary, it is conceivable that the steps can also be executed in a different order or else in parallel to one another, unless one step builds upon another step, this absolutely requiring that the building step be executed subsequently (this being, however, clear in the individual case). The stated orders are thus preferred embodiments of the present disclosure.
As used herein, the articles "a" and "an" are intended to include one or more items and may be used interchangeably with "one or more" and "at least one." As used in the specification and the claims, the singular form of "a", "an", and "the" include plural referents, unless the context clearly dictates otherwise. Where only one item is intended, the term "one" or similar language is used. Also, as used herein, the terms "has", "have", "having", or the like are intended to be open-ended terms. Further, the phrase "based on" is intended to mean "based at least partially on" unless explicitly stated otherwise. Further, the phrase "based on" may mean "in response to" and be indicative of a condition for automatically triggering a specified operation of an electronic device (e.g., a controller, a processor, a computing device, etc.) as appropriately referred to herein.
Some implementations of the present disclosure will be described more fully hereinafter with reference to the accompanying drawings, in which some, but not all implementations of the disclosure are shown. Indeed, various implementations of the disclosure may be embodied in many different forms and should not be construed as limited to the implementations set forth herein; rather, these example implementations are provided so that this disclosure will be thorough and complete, and will fully convey the scope of the disclosure to those skilled in the art.

The present disclosure provides means for determining the sufficiency of a training dataset.

The training dataset is used to train and validate a machine learning model.

Such a "machine learning model", as used herein, may be understood as a computer implemented data processing architecture. The machine learning model can receive input data and provide output data based on that input data and the machine learning model, in particular parameters of the machine learning model. The machine learning model can learn a relation between input data and output data through training. In training, parameters of the machine learning model are adjusted in order to provide a desired output for a given input.

The process of training a machine learning model involves providing a machine learning algorithm (that is the learning algorithm) with training data to learn from. The term "trained machine learning model" refers to the model artifact that is created by the training process. The training data must contain the correct answer, which is referred to as the target. The learning algorithm finds patterns in the training data that map input data to the target, and it outputs a trained machine learning model that captures these patterns.

The present invention is described with reference to an example comprising a machine learning model for recognizing entities in text files. Such a machine learning model can be used, for example, to identify evidence of adverse events in text files. However, the invention is not limited to such a model and such use of the model.

In a first step, the machine learning model is received and/or provided.

The machine learning model can be any type of model. For example, it can be a classification model, a regression model, or a generative model. It is also possible that the model performs several different tasks. It can be a model that classifies text and/or images and/or audio data. It may be a model that analyzes indications of a disease based on patient data and/or makes a recommendation for a therapy and/or a dosage of a drug. It can be a model that segments radiological images and/or identifies abnormalities in radiological images.

In one embodiment of the present disclosure, the machine learning model is a model that identifies adverse events in text files. In particular, it may be a model for named-entity detection/recognition in text files.

Named-entity detection/recognition is a subtask of information extraction that seeks to locate and classify named entities mentioned in unstructured text into pre-defined categories such as person names, organizations, locations, medical codes, time expressions, quantities, monetary values, percentages, etc.

Named-entity detection/recognition is used in many fields in Natural Language Processing (NLP). An important application area is the identification of adverse events. An adverse event (AE) is any untoward medical occurrence in a patient or clinical investigation subject administered a medicinal (investigational) product. An adverse event does not necessarily have a causal relationship with this treatment. An adverse event (AE) can therefore be any unfavorable and unintended sign (including an abnormal laboratory finding), symptom, or disease temporally associated with the use of a medicinal (investigational) product, whether or not related to the medicinal (investigational) product.

The machine learning model for named-entity detection/recognition can be, for example, a transformer-based bidirectional encoder language model such as BERT, ClinicalBERT or BioBERT. These and other models are described in the prior art (see e.g.: M. Koroteev: BERT: A Review of Applications in Natural Language Processing and Understanding, 2021, arXiv:2103.1194; K. Huang et al.: ClinicalBERT: Modeling Clinical Notes and Predicting Hospital Readmission, 2020, arXiv: 1904.05342; J. Lee et al.: BioBERT: a pre-trained biomedical language representation model for biomedical text mining, 2019, arXiv:1901.08746).

A Text-To-Text Transfer Transformer (T5) was used to achieve the results described in this disclosure. T5 is a pre-trained encoder-decoder transformer introduced by Raffel *et al.* (C. Raffel, et al.: Exploring the limits of transfer learning with a unified text-to-text transformer, J. Mach. Learn. Res., 2020, 21(140), p. 1-67).

The machine learning model can be read from a data memory and/or transmitted from another computer system.

In a further step, data for training and validating the machine learning model is received and/or provided. This data is also referred to as the initial data set in this description, in this disclosure.

The terms "receive data" and "provide data" mean accept, retrieve, and/or obtain data from one or more sources.

The data of the initial dataset can be entered into the computer system of the present disclosure by a user thereof, and/or read from one or more data memories, and/or transmitted from one or more separate computer systems.

The initial dataset comprises a number $M$ of records, where $M$ is an integer that is preferably greater than 100. For example, a record can be a text file, audio data, an image, an array of numbers and/or any other data file. In one embodiment of the present disclosure, each record is a text file, in particular a text file with medical content. Such a text file may come from a scientific article, social media, patient records and/or any other source.

Usually, each record can be assigned to one or more aspects, or in other words, each record represents one or more aspects. It is also possible that the initial dataset includes one or more records that cannot be assigned to any aspect. In other words: each record of at least a portion of the number $M$ of records is related to one or more aspects of a number $N$ of aspects.

The number $N$ of aspects may be 1, 2, 3, 4, 5, 6, 7, 8, 9, 10 or more.

An aspect can be a class to which one or more records are to be assigned using the machine learning model.

An aspect can be an object or a subject or an event that is characterized by a record.

An aspect can be a source from which a record originates.

An aspect can be a method of how a record was obtained, created, and/or processed.

In the case of an image, an aspect may be an object or subject or an event that is at least partially depicted in the image.

In the case of an audio file, an aspect can be a particular sound, or an event that is characterized by one or more sounds (such as cough).

In the case of a text file, an aspect can be an entity that occurs in the text file. In the case of a text file, an aspect can also be a source from which the text file originates.

An aspect can also be a combination of different aspects. For example, with respect to a text file, an aspect may be an entity that occurs one or more times in a text file from a particular source.

In case of named entity detection/recognition, each record of at least a portion of the number $M$ of records represents one or more entities of a number $N$ of entities, where each record of the portion of the number $M$ of records is optionally from a particular source.

The term "represent" in the case of entity detection/recognition in text files means that one or more terms that can be associated with the entity are included in the text. Examples are provided below.

When detecting entities to identify adverse events, it is not uncommon for the number $N$ of entities to be in the order of 20 or even more.

Table 1 below gives an example where 18 entities are represented by the initial dataset.

For each aspect $A_i$ a relative frequency $f_i$ can be specified with which the aspect is represented in the intial dataset:

$$f_i = \frac{F_i}{M}$$

wherein i is an index that runs through the integers from 1 to $N$ (i = 1, 2, ..., $N$).

$F_i$ is the absolute number by which the aspect $A_i$ is represented in the initial dataset.

$F_i$ can be, for example, the number of records representing the aspect $A_i$. For example, if the records are text files from three different sources $A_1$, $A_2$, and $A_3$, then the number $F_1$ indicates the number of records from source $A_1$, the number $F_2$ indicates the number of records from source $A_2$, and the number $F_3$ indicates the number of records from source $A_3$.

If the aspects are part of the records, and can occur more than once in a record, F; can be, for example, the number of occurrences of an aspect in the initial dataset: $F_i = \sum_{j=1}^{M} O_{R_j}(A_i)$ , wherein $O_{Rj}(A_i)$ indicates the number of occurrences of the aspect $A_i$ in the record $R_j$, and j is an integer that runs through the integers from 1 to $M$.

For example, if the records are text files in which the entities "drug", "adverse event" (AE), and "dose" can occur one or more times, then the number $F_{drug}$ can indicate the number of occurrences of the entity "drug" in all records of the initial dataset, the number $F_{AE}$ can indicate the number of occurrences of the entity "adverse event" in in all records of the initial dataset, and the number $F_{dose}$ can indicate the number of occurrences of the entity "dose" in in all records of the initial dataset.

As described above, an aspect can also be a combination of several aspects. For example, if the aspects of an initial dataset are the entities "drug", "adverse event" (AE), and "dose" that occur one or more times in records from two different sources $A_1$ and $A_2$, then $F_{1,drug}$ can be the number of occurrences of the entity "drug" in all records from the source $A_1$, $F_{2,drug}$ can be the number of occurrences of the entity "drug" in all records from the source $A_2$, $F_{1,AE}$ can be the number of occurrences of the entity "adverse event" in all records from the source $A_1$, $F_{2,AE}$ can be the number of occurrences of the entity "adverse event" in all records from the source $A_2$, $F_{1,dose}$ can be the number of occurrences of the entity "dose" in all records from the source $A_1$, and $F_{2,dose}$ can be the number of occurrences of the entity "dose" in all records from the source $A_2$.

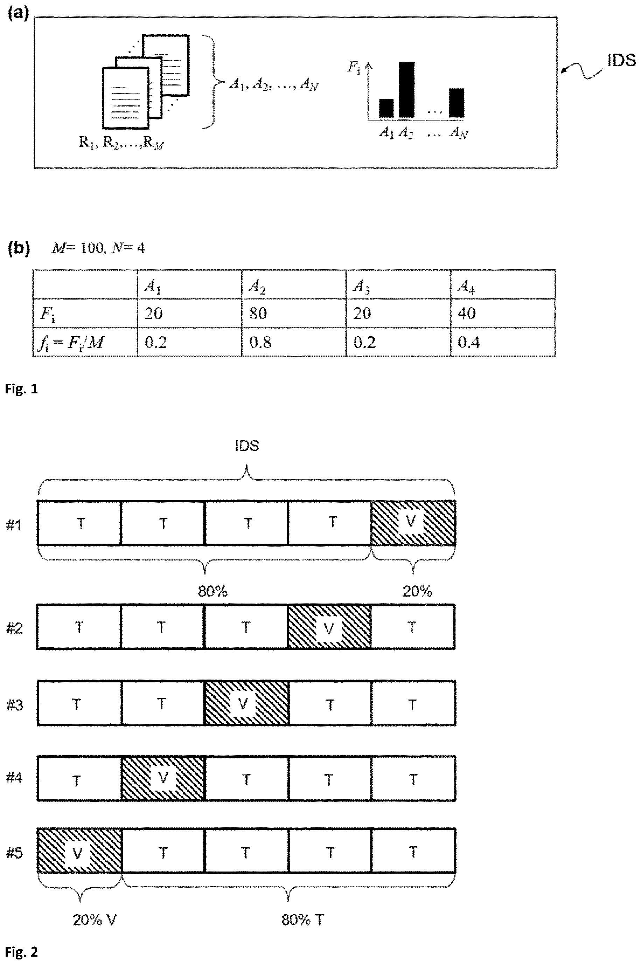

Fig. 1 (a) shows schematically an example of an initial dataset. The initial dataset TDS comprises a number $M$ of records: $R_1$, $R_2$, ..., $R_M$. The records represent a number $N$ of aspects: $A_1$, $A_2$, ..., $A_N$. For each aspect $A_i$, an absolute frequency $F_i$ is given in the form of a bar with which the entity $A_i$ is represented in the initial dataset IDS, wherein i is an index that runs through the integers from 1 to $N$ (i = 1, 2, ..., $N$).

Fig. 1 (b) shows a table of aspects together with their absolute and relative frequencies. In the example shown in Fig. 1 (b), there are 4 aspects ($N$=4). The number of records in the initial dataset is 100 ($M$=100). The absolute frequency with which aspect $A_1$ is represented in the initial dataset is 20 ($F_1$ = 20). $F_1$ (i=1) can be the number of records that can be assigned to aspect $A_1$ (single or multiple times), or $F_1$ (i=1) can be the number with which the aspects occur in all records of the initial dataset. This applies analogously to the other frequencies $F_2$ (i=2), $F_3$ (i=3), and $F_4$ (i=4). The absolute frequency with which aspect $A_2$ is represented in the initial dataset is 80 ($F_2$ = 80). The absolute frequency with which aspect $A_3$ is represented in the initial dataset is 20 ($F_3$= 20). The absolute frequency with which aspect $A_4$ is represented in the initial dataset is 40 ($F_4$ = 40). In the example shown in Fig. 1 (b), records can represent multiple aspects. From the absolute frequencies $F_i$, the relative frequencies $f_i$ can be calculated using the formula given: $f_i = F_i/M$.

Records of the initial dataset are used as input data when training and validating the machine learning model.

The records are annotated, i.e., for each record there is information which aspect/aspects is/are represented by the record. This information can be used as target data when training the machine learning model. As described, there may be records in the initial dataset that do not represent any aspect. The information that a record is not associated with any aspect can be used as target data, too.

In the training process, input data (records) are inputted into the machine learning model and the machine learning model generates an output. The output is compared with the (known) target. Parameters of the machine learning model are modified in order to reduce the deviations between the output and the (known) target to a (defined) minimum.

In general, a loss function can be used for training the machine learning model. For example, a loss function can include a metric of comparison of the output and the target. The loss function may be chosen in such a way that it rewards a wanted relation between output and target and/or penalizes an unwanted relation between an output and a target. Such a relation can be, e.g., a similarity, or a dissimilarity, or another relation. A loss function can be used to calculate a loss value for a given pair of output and target. The aim of the training process can be to modify (adjust) parameters of the machine learning model in order to reduce the loss value to a (defined) minimum.

For example, the machine learning model can be trained to output a "1" if a term appears in a record that can be assigned to a particular entity, and output a "0" if no term appears in the record set that can be assigned to a particular entity. In such a case, a cross-entropy loss can be used as loss function (see, e.g.: https://nlp.stanford.edu/-socherr/pa4_ner.pdf).

For example, in the case of entity span detection, the loss function may be an entity span recognition loss (see, e.g.: Q. Lai *et al.*: *Joint Entity-Relation Extraction via Improved Graph Attention Networks,* Symmetry 2020, 12, 1746).

Examples of loss functions are described in the literature for many other machine learning models and training tasks.

To train a machine learning model, the initial dataset is usually divided into training and validation data. The training data is used to train the model, the validation data is used to check how well the trained machine learning model applies to new data. "New data" means that the data was not used to train the model (also referred to as "unseen data").

Usually, cross-validation is used. Cross-validation is a resampling method that uses different portions of the data to train and validate a model on different iterations.

One cycle of cross-validation involves partitioning a sample of data into complementary subsets, performing the analysis on one subset (called the training data set), and validating the analysis on the other subset (called the validation data set). Usually, multiple rounds of cross-validation are performed using different partitions, and the validation results are combined (e.g., averaged) over the cycles to give an estimate of the model's performance.

A common method for generating one or more training data sets and validation data sets is to divide the initial dataset into a number $k$ of folds, where $k$ is an integer greater than two. A number of $p$ folds are used for training (training folds) and a number of $q$ folds are used for validation (validation folds), where $p$ and $q$ are integers, $q \leq p < k$, and $(p+q) = k$.

Fig. 2 shows schematically by way of example, a 5-fold cross validation. The initial dataset IDS was divided into 5 folds ($k$=5). A number of 5 training and validation runs are performed. The training and validation runs are numbered consecutively. #1, #2, #3, #4, #5. In each run, a number of 4 folds ($p$=4) is used for training and one fold ($q$=1) is used for validation (80:20 split). The folds used for training (training folds) are marked with a T. The folds used for validation (validation folds) are marked with a hatching and a V.

In order for the data used for training and the data used for validation to best represent the entire data set, care is usually taken to ensure that the aspects are represented with the same relative frequency in the training data and the validation data.

To achieve this, the records are not randomly distributed between training and validation data but by stratified sampling. Stratified sampling means that each aspect is represented in each fold with the same relative frequency as in the overall data. The corresponding training and validation method is also referred to as stratified $k$-fold cross validation (see, e.g.: N. Diamantidis et al.: Unsupervised stratification of cross-validation for accuracy estimation, Artificial Intelligence, 2000, 116(1-2), 1-16).

The number $k$ indicates the partitions (folds) into which the initial dataset is divided. Usually, a division into 5 folds is used, whereby 4 folds (training folds) are used for training and one fold (validation fold) for validation (80:20 split). However, the number $k$ of folds can also be less than or greater than 5, for example 2, 3, 4, 6, 7, 8, 9, 10 or more.

The greater the number $k$ of folds, the more copies of the machine learning model need to be trained.

In a further step, a number of copies of the machine learning model is trained and validated. Copies of the machine learning model are trained on fractions of different sizes of the one or more training data sets generated from the initial dataset. Each aspect is represented in each fraction with the same relative frequency as in the initial dataset.

For example, in a first step, a first copy of the machine learning model is trained and validated using all $k$ folds. Usually, when the initial dataset is divided into $k$ folds, a number of ($k$-1) folds is used for training and one fold is used for validation.

In a further step, one or more copies of the machine learning model are trained using one or more fractions of the folds.

A fraction is a portion of the training data (e.g., a portion of the training folds).

If the initial dataset is divided into $k$ folds and $p$ folds are used for training (training folds) and $q$ folds are used for validation (validation folds), then a fraction of 20% and/or 40% and/or 60% and/or 80% of the training folds can be used for training, wherein $p$ and $q$ are integers, $q \leq p < k$, and $(p+q) \leq k$. However, it is also possible to use other percentages, such as 10% and/or 30% and/or 50% and/or 55% and/or 70% and/or 83% and/or 90% and/or 95%. One or more fractions of the validation folds may be generated and validation performed based on the one or more fractions. However, it is also possible that all $q$ validation folds are used for validation.

In each fraction, each aspect is represented with the same relative frequency as in the initial dataset. Cross-validation using stratified fractions is referred to as fractional stratified cross-validation in this disclosure.

Copies of the machine learning model can be trained using fractions of increasing or decreasing size, for example. Fractions of increasing size contain increasingly more training data, fractions of decreasing size contain a decreasing amount of training data.

The amount of validation data can remain the same in each run and each cycle, as described herein. In a run, the training data are usually varied; the validation data usually remain the same. A variation of the validation data can occur from one cycle to another cycle.

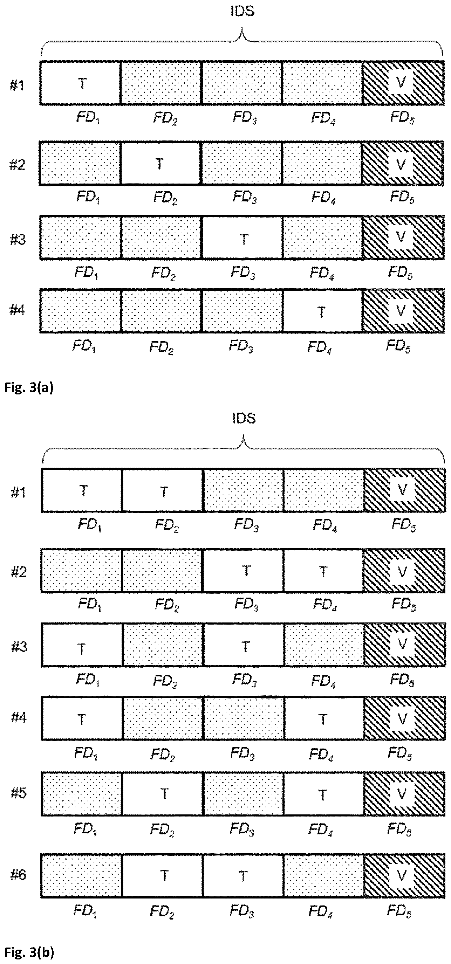

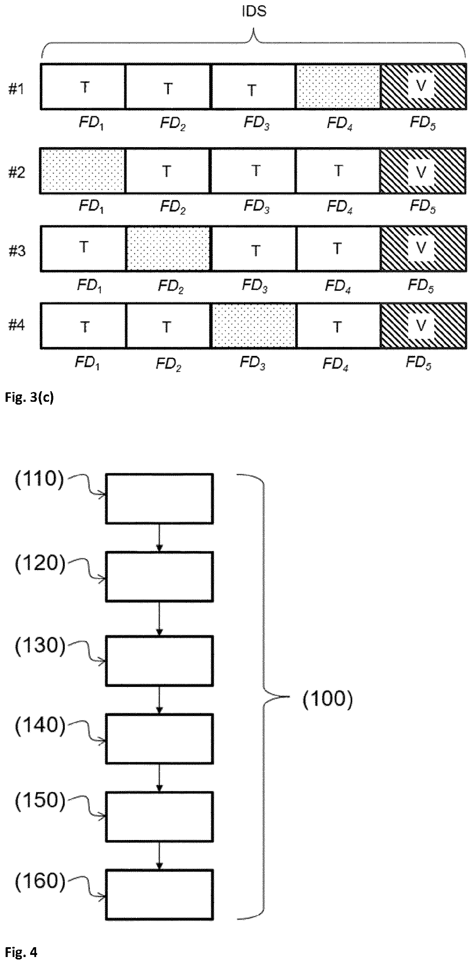

In one embodiment of the present disclosure, a number of 1, 2, ..., and/or ($p$-1) training folds is used for training, and $q$ validation folds are used for validation, wherein $q \leq p < k$, and $(p+q) \leq k$. Such a division of the initial dataset is shown schematically and by way of example in Fig. 3.

Fig. 3 shows schematically examples of fractional stratified k-fold cross-validation.

In Fig. 3(a) the initial dataset IDS is divided into 5 ($k$=5) folds: $FD_1$, $FD_2$, $FD_3$, $FD_4$, and $FD_5$. Fig. 3(a) shows four training and validation runs: #1, #2, #3 and #4. The four runs form one cycle. In each run, one fold is used for training ($p$=1), and one fold is used for validation ($q$=1).

In training run #1, fold $FD_1$ is used for training and fold $FD_5$ is used for validation. In training run #2, fold $FD_2$ is used for training and fold $FD_5$ is used for validation. In training run #3, fold $FD_3$ is used for training and fold $FD_5$ is used for validation. In training run #4, fold $FD_4$ is used for training and fold $FD_5$ is used for validation. Folds marked with dots are not used in the respective runs.

After the four runs shown in Fig. 3(a) (after the first cycle), another four training and validation runs (another cycle) can be performed using, for example, fold $FD_4$ for validation and one of each of the folds $FD_1$, $FD_2$, $FD_3$, and $FD_5$ for training.

After that, another four runs (another cycle) can be performed, in which, for example, fold $FD_3$ is used for validation and one of each of the folds $FD_1$, $FD_2$, $FD4$, and $FD_{5\ is}$ used for training.

After that, another four runs (another cycle) can be performed, in which, for example, fold $FD_2$ is used for validation and one of each of the folds $FD_1$, $FD_3$, $FD4$, and $FD_{5\ is}$ used for training.

After that, another four runs (another cycle) can be performed, in which, for example, fold $FD_1$ is used for validation and one of each of the folds $FD_2$, $FD_3$, $FD4$, and $FD_{5\ is}$ used for training.

This gives a total of 5 cycles x 4 runs = 20 training and validation runs.

In Fig. 3(b) the initial dataset IDS is again divided into 5 ($k$=5) folds: $FD_1$, $FD_2$, $FD_3$, $FD_4$, and $FD_5$. Two folds are used for training ($p$=2), and one fold is used for validation ($q$=1). Fig. 3(a) shows six training and validation runs: #1, #2, #3, #4, #5, and #6.

As in Fig. 3(a), the folds marked with a T in Fig. 3 (b) are used for training and the folds marked with a V are used for validation. The folds marked with dots are not used in the respective runs.

After the 6 runs shown in Fig. 3(b) have been performed, the first cycle is complete, and 4 more cycles can follow, varying the fold used for validation. This gives a total of 5 cycles x 6 runs = 30 training and validation runs.

However, it is not necessary that all runs be performed.

In an embodiment of the present disclosure, so many runs are performed in each cycle that each training fold has been used at least once in a training run. Once each training fold has been used once, the cycle is complete.

This means that the cycle shown in Fig. 3 (b) can already be completed after the two runs #1 and #2. Instead of runs #1 and #2, runs #3 and #5, or #4 and #6 can be executed.

In such a case, 5 cycles * 2 runs = 10 training and validation runs are performed.

In Fig. 3(c) the initial dataset IDS is again divided into 5 ($k$=5) folds: $FD_1$, $FD_2$, $FD_3$, $FD_4$, and $FD_5$. Three folds are used for training ($p$=3), and one fold is used for validation ($q$=1). Fig. 3(c) shows four training and validation runs: #1, #2, #3, and #4.

As in Fig. 3(a) and Fig. 3(b), the folds marked with a T in Fig. 3 (c) are used for training and the folds marked with a V are used for validation. The folds marked with dots are not used in the respective runs.

After the 4 runs shown in Fig. 3(c) have been performed, the first cycle is complete, and 5 more cycles can follow, varying the fold used for validation. This gives a total of 5 cycles x 4 runs = 20 training and validation runs.

However, as already stated above, it is not necessary that all runs be performed. In an embodiment of the present disclosure, so many runs are performed in each cycle that each training fold has been used at least once in a training run. Once each training fold has been used once, the cycle is complete.

This means that the cycle shown in Fig. 3 (c) can already be completed after the two runs #1 and #2. Instead of runs #1 and #2, runs #3 and #4 can be executed.

In such a case, 5 cycles * 2 runs = 10 training and validation runs are performed.

When training a copy of the machine learning model with 4 training folds, the situation that arises is that shown in Fig. 2: There is only one cycle of 5 training and validation runs.

When all cycles and runs for single-fold, dual-fold, triple-fold, and quad-fold training are added, the total number of training and validation runs is either 45 or 75, depending on whether a cycle is completed when all folds have been used once in a training session or whether all combinations of folds are used.

It should be noted that Fig. 3 only shows some examples of how fractions can be formed. Further possibilities are conceivable. The invention is not limited to the possibilities shown in Fig. 3.

After training and validating a copy of a machine learning model, the performance of the copy is determined. Optionally, the performance is determined with respect to at least one aspect. The at least one aspect is also referred to in this disclosure as a selected aspect. It is possible that in relation to each aspect a performance is determined. For example, if the machine learning model is a classification model, and the aspects represent the classes into which the machine learning model is to classify records, then a performance can be determined in terms of classifying records into one or more classes. If the machine learning model is a classification model and the aspects represent the sources from which the records to be classified originate, the performance in relation to the classification of records from one or more specific sources can be determined.

Performance indicates how well a copy of the machine learning model performs the task for which it was trained on records representing one or more aspects.

To determine performance, the well-known performance metrics commonly used in the validation of machine learning models can be calculated.

For example, if the machine learning model is a binary classification model (the model returns as output the value "1" if an aspect (e.g., an entity) is represented in the record or the value "0" if the aspect (e.g., the entity) is not represented in the record) an *F*-score can be calculated.

The *F*-score is calculated from the precision and recall, where the precision is the number of true positive results divided by the number of all positive results, including those not identified correctly, and the recall is the number of true positive results divided by the number of all samples that should have been identified as positive. Precision is also known as positive predictive value, and recall is also known as sensitivity in binary classification.

The highest possible value of an *F*-score is 1.0, indicating perfect precision and recall, and the lowest possible value is 0 if both precision and recall are zero.

The traditional *F*-measure or balanced *F*-score (*F*1 score) is the harmonic mean of precision and recall:

$$F1 = 2 \cdot \frac{\text{precision} \cdot \text{recall}}{\text{recall} + \text{precision}} = \frac{2 \cdot TP}{2 \cdot TP + FP + FN}$$

in which *TP* is the number of true positive results, *FP* is the number of false positive results and *FN* is the number or false negative results.

It should be noted that there are many other ways to determine the performance of a machine learning model (see, e.g.: G. Varoquaux *et al*.: *Evaluating machine learning models and their diagnostic value,* https://hal.archives-ouvertes.fr/hal-03682454v3).

The calculated performance scores are used in a next step to determine whether the data used to train the machine learning model is sufficient, optionally with respect to the particular aspect(s) for which performance metrics were determined (the selected aspect(s)).

For example, if the performance metric increases continuously as the size of the fractions increases, then this is a clear indication that the performance of the model is increasing as the amount of data increases: This in turn is an indication that with more data, the performance can be further increased. The amount of data used to train the model is insufficient (e.g., with respect to the selected aspect(s)).

For example, if the performance metric reaches saturation as the size of the fractions increases, i.e., does not statistically significantly increase with increasing size of fractions, then this is a clear indication that the performance of the model cannot be increased by an increasing amount of training data increases.

To test whether the amount of training data is sufficient, it can be determined whether the performance of the copies of the machine learning model reaches saturation with increasing size of the fractions.

When sufficient amounts of training data are available and one plots the performance of copies trained with fractions of the training data as described in this disclosure as a function of the size of the fractions (i.e., the amount of training data used for training), one typically sees a performance curve that initially increases as the size of the fractions increases and then reaches saturation.

From such a plot, a critical amount of data can be determined, which should not be fallen short of.

For example, the critical amount of data may be that at which there is still no significant performance degradation, while at a lower amount of data there is a statistically significant performance degradation relative to performance saturation (the maximum performance).

If the performances of the copies do not show saturation in case all the training data intended for training were used for training, it means that the training data are insufficient.

If there are signs/indication of insufficient training data, a message that the training dataset with respect to the selected aspect is insufficient to train the model can be outputted.

If there are signs/indication of sufficient training data, a message that the training dataset with respect to the selected aspect is sufficient to train the model can be outputted.

Such a notification may be displayed on a screen, output via a printer, output as a voice message via a speaker, stored in a data memory, and/or transmitted to a separate computer system.

If the training data is not sufficient, the user can collect more (further) data and train the model with the more (further) data to obtain a model that performs the trained task for the selected entity with sufficient accuracy.

Alternatively or additionally, the performance can be outputted as a function of the size of the fractions, so that a user can see whether saturation of the performance is already reached with increasing size of the fractions.

Fig. 4 shows schematically an embodiment of the computer-implemented method of the present disclosure in form of a flow chart.

The method (100) comprises the steps:

(110) receiving and/or providing a machine learning model,

(120) receiving and/or providing an initial dataset for training and validating the machine learning model, the initial dataset comprising a number $M$ of records, each record of at least a portion of the number of records being related to one or more aspects of a number $N$ of aspects, wherein for each aspect $A_i$ there is a relative frequency $f_i$ indicating how often the aspect is represented in the initial dataset, wherein i is an index that runs through the integers from 1 to $N$,

(130) generating one or more sets of training data and validation data from the initial dataset, wherein each aspect is represented in each set with the same relative frequency as in the initial dataset,

(140) training a number of copies of the machine learning model on fractions of different sizes of the one or more training data sets, wherein each aspect is represented in each fraction with the same relative frequency as in the initial dataset,

(150) determining performance of each copy of the machine learning model, optionally with respect to a selected aspect,

(160) determining if the performance of the copies of the machine learning model reaches saturation with increasing size of the fractions and outputting a message about the saturation, and/or outputting the performance of the copies as a function of the size of fractions.

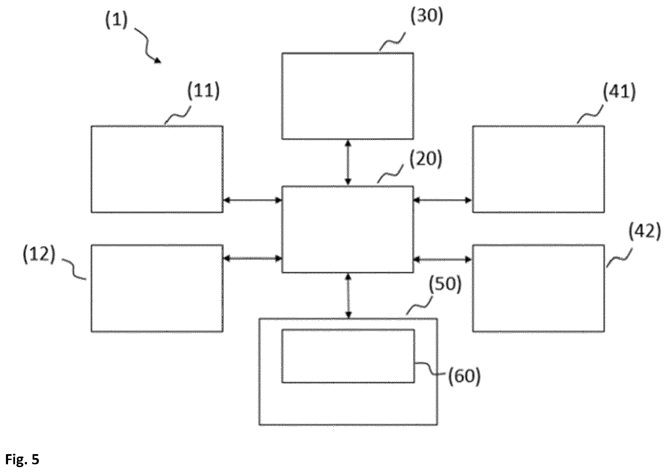

Fig. 5 illustrates a computer system (1) according to some example implementations of the present disclosure in more detail.

Generally, a computer system of exemplary implementations of the present disclosure may be referred to as a computer and may comprise, include, or be embodied in one or more fixed or portable electronic devices. The computer may include one or more of each of a number of components such as, for example, a processing unit (20) connected to a memory (50) (e.g., storage device).

The processing unit (20) may be composed of one or more processors alone or in combination with one or more memories. The processing unit (20) is generally any piece of computer hardware that is capable of processing information such as, for example, data, computer programs and/or other suitable electronic information. The processing unit (20) is composed of a collection of electronic circuits some of which may be packaged as an integrated circuit or multiple interconnected integrated circuits (an integrated circuit at times more commonly referred to as a "chip"). The processing unit (20) may be configured to execute computer programs, which may be stored onboard the processing unit (20) or otherwise stored in the memory (50) of the same or another computer.

The processing unit (20) may be a number of processors, a multi-core processor or some other type of processor, depending on the particular implementation. For example, it may be a central processing unit (CPU), a field programmable gate array (FPGA), a graphics processing unit (GPU) and/or a tensor processing unit (TPU). Further, the processing unit (20) may be implemented using a number of heterogeneous processor systems in which a main processor is present with one or more secondary processors on a single chip. As another illustrative example, the processing unit (20) may be a symmetric multi-processor system containing multiple processors of the same type. In yet another example, the processing unit (20) may be embodied as or otherwise include one or more ASICs, FPGAs or the like. Thus, although the processing unit (20) may be capable of executing a computer program to perform one or more functions, the processing unit (20) of various examples may be capable of performing one or more functions without the aid of a computer program. In either instance, the processing unit (20) may be appropriately programmed to perform functions or operations according to example implementations of the present disclosure.

The memory (50) is generally any piece of computer hardware that is capable of storing information such as, for example, data, computer programs (e.g., computer-readable program code (60)) and/or other suitable information either on a temporary basis and/or a permanent basis. The memory (50) may include volatile and/or non-volatile memory, and may be fixed or removable. Examples of suitable memory include random access memory (RAM), read-only memory (ROM), a hard drive, a flash memory, a thumb drive, a removable computer diskette, an optical disk, a magnetic tape or some combination of the above. Optical disks may include compact disk - read only memory (CD-ROM), compact disk - read/write (CD-R/W), DVD, Blu-ray disk or the like. In various instances, the memory may be referred to as a computer-readable storage medium or data memory. The computer-readable storage medium is a non-transitory device capable of storing information, and is distinguishable from computer-readable transmission media such as electronic transitory signals capable of carrying information from one location to another. Computer-readable medium as described herein may generally refer to a computer-readable storage medium or computer-readable transmission medium.

In addition to the memory (50), the processing unit (20) may also be connected to one or more interfaces for displaying, transmitting and/or receiving information. The interfaces may include one or more communications interfaces and/or one or more user interfaces. The communications interface(s) may be configured to transmit and/or receive information, such as to and/or from other computer(s), network(s), database(s) or the like. The communications interface may be configured to transmit and/or receive information by physical (wired) and/or wireless communications links. The communications interface(s) may include interface(s) (41) to connect to a network, such as using technologies such as cellular telephone, Wi-Fi, satellite, cable, digital subscriber line (DSL), fiber optics and the like. In some examples, the communications interface(s) may include one or more short-range communications interfaces (42) configured to connect devices using short-range communications technologies such as NFC, RFID, Bluetooth, Bluetooth LE, ZigBee, infrared (e.g., IrDA) or the like.

The user interfaces may include a display (30). The display (screen) may be configured to present or otherwise display information to a user, suitable examples of which include a liquid crystal display (LCD), light-emitting diode display (LED), plasma display panel (PDP) or the like. The user input interface(s) (11) may be wired or wireless, and may be configured to receive information from a user into the computer system (1), such as for processing, storage and/or display. Suitable examples of user input interfaces include a microphone, image or video capture device, keyboard or keypad, joystick, touch-sensitive surface (separate from or integrated into a touchscreen) or the like. In some examples, the user interfaces may include automatic identification and data capture (AIDC) technology (12) for machine-readable information. This may include barcode, radio frequency identification (RFID), magnetic stripes, optical character recognition (OCR), integrated circuit card (ICC), and the like. The user interfaces may further include one or more interfaces for communicating with peripherals such as printers and the like.

As indicated above, program code instructions (60) may be stored in memory (50), and executed by processing unit (20) that is thereby programmed, to implement functions of the systems, subsystems, tools and their respective elements described herein. As will be appreciated, any suitable program code instructions (60) may be loaded onto a computer or other programmable apparatus from a computer-readable storage medium to produce a particular machine, such that the particular machine becomes a means for implementing the functions specified herein. These program code instructions (60) may also be stored in a computer-readable storage medium that can direct a computer, processing unit or other programmable apparatus to function in a particular manner to thereby generate a particular machine or particular article of manufacture. The instructions stored in the computer-readable storage medium may produce an article of manufacture, where the article of manufacture becomes a means for implementing functions described herein. The program code instructions (60) may be retrieved from a computer-readable storage medium and loaded into a computer, processing unit or other programmable apparatus to configure the computer, processing unit or other programmable apparatus to execute operations to be performed on or by the computer, processing unit or other programmable apparatus.

Retrieval, loading and execution of the program code instructions (60) may be performed sequentially such that one instruction is retrieved, loaded and executed at a time. In some example implementations, retrieval, loading and/or execution may be performed in parallel such that multiple instructions are retrieved, loaded, and/or executed together. Execution of the program code instructions (60) may produce a computer-implemented process such that the instructions executed by the computer, processing circuitry or other programmable apparatus provide operations for implementing functions described herein.

Execution of instructions by processing unit, or storage of instructions in a computer-readable storage medium, supports combinations of operations for performing the specified functions. In this manner, a computer system (1) may include processing unit (20) and a computer-readable storage medium or memory (50) coupled to the processing circuitry, where the processing circuitry is configured to execute computer-readable program code instructions (60) stored in the memory (50). It will also be understood that one or more functions, and combinations of functions, may be implemented by special purpose hardware-based computer systems and/or processing circuitry which perform the specified functions, or combinations of special purpose hardware and program code instructions.

Examples of the present invention are described below, without the intention of reducing the invention to these examples.

Examples

The examples concern the recognition of entities in text files.

A first training dataset was created combining different language types with 18 different entities. The entities and the frequencies with which they occur in the data sets are listed in Table 1.

Table 1

| Entity | Description | # Entity Occurrences | in % |
|---|---|---|---|
| Action | Introduced to describe the mode of action (e.g., *multikinase inhibitor, TKI*), we used it also to categorize a drug or methodology in more detail (e.g., *gonadotropin releasing hormone (gnrh) analog*) or to give additional information about substance class (e.g., *broad-spectrum antibiotic*) | 213 | 2.13% |
| Administration form / Primary packaging | Used to describe the administration form of a medication (e.g., *gel, tablet, ointment, contrast agent*), give some information about the form (e.g., *liquid*) or the primary or secondary packaging (e.g., *filler, bottle, syringe*) | 491 | 4.92% |
| Administration route | *Used to describe the administration route of a medication (e.g., p. o., intravenous)* | 164 | 1.64% |
| Adverse event (AE) | Any occurrence of a side effect for a patient which could be potentially caused by a drug or medical device (this may include also drug ineffectiveness, beneficial drug effects or unexpected therapeutic responses), in case of medical devices any Product Technical Complaint (PTC) occurrence in which the device could had direct contact with a patient/consumer is also reported as AE. | 1602 | 16.04% |
| Comorbidity | Refers to further conditions (concurrent conditions or co-infections) that define the patient population apart from the 'Disease/symptoms/procedure' aspect of the indication (e.g., *treatment of pancreatic insufficiency in patients with cystic fibrosis*), indication: pancreatic insufficiency, comorbidity: cystic fibrosis). Due to sparse data in the original text, there are potential problems to differentiate comorbidity from indication or medical history / condition. | 143 | 1.43% |
| Dose | Any specific quantitative measurements (e.g., *0.3 mg/kg/day, 50 Gy)*, frequency mentions (e.g., *two tablets twice a day*) or unspecific mentions (e.g., *overdose, high dose*) which describes the dosage of drug or methodology | 343 | 3.43% |

(continued)

| Entity | Description | # Entity Occurrences | in % |
|---|---|---|---|
| Drug / Device | Used to specify a drug or device by e.g., INN (international nonproprietary name), trade name, IUPAC name (International Union of Pure and Applied Chemistry), abbreviations e.g., *MTX.* This category does not include the names of metabolites or reaction byproducts. | 1504 | 15.06% |
| Indication | Used to specify the reason for using a drug, device, or methodology. This term is used intentionally not in a regulatory sense of registered medication in order to detect potential off-label use (e.g., *cutaneous t-cell lymphoma* incl. abbreviations *ctcl, ADHD,* informal terms: *drippy nose, for my heart*). | 787 | 7.88% |
| Intended effect | Used to specify the result/type of outcome intended for the target condition, aim or strategy to be achieved by the indication (e.g., *treatment, prophylaxis, replacement therapy, chemotherapy, prevention*) | 448 | 4.48% |
| Medical history / condition | Used to describe past condition or medical occurrence. In case it is not clear if the medical occurrence persists, sicknesses are annotated as comorbidity. | 50 | 0.50% |
| Method / Procedure / Administration | Used to describe a procedure (e.g., *colonoscopy prep, insertion, removal, dilate*) or methodology (e.g., *colonoscopy, ultrasound, MRI, HAIC*) | 402 | 4.02% |
| Outcome | Mainly used to describe the reached outcome of a study or activity (e.g., *disease stabilization, demonstrated antitumor activity and safety*) | 42 | 0.42% |
| Product Dose Combination (PDC) | Product Dose Combination specifies if a dose information refers to a specific drug, the syntax is <Product>|<Dose>. In case of uncertainty, all products mentioned are annotated. | 337 | 3.37% |
| Product Event Combination (PEC) | Product Event Combination specifies if an adverse event refers to a drug, the syntax is <Product>I<Event>. In case of uncertainty, all products mentioned are annotated. | 1420 | 14.22% |
| Product Indication Combination (PIC) | Product Indication Combination specifies if an indication refers to a drug, the syntax is <Product>|<Indication>. In case of uncertainty, all products mentioned are annotated. | 1082 | 10.83% |
| Product Technical Complaint (PTC) | Any occurrence which may affect the quality of a product which is caused by the manufacturing process (including delivery, storage, counterfeit) or the design of a medication or device, (e.g., *4 tablets were missing, the pill has a different color, a piece of a 2mm-3mm piece of IUD missing, IUD was expelled, or removal of IUD*). | 693 | 6.94% |
| Target parameter | Used to characterize study or experiment targets (e.g., *efficacy and toxicity, prolong survival, 6 months PFS of 50% or greater*) | 31 | 0.31% |
| Target population | Used to describe - specifically or unspecifically - a subpopulation of an experiment (*smaller premature infants*), study (*post-menopausal women*) or single case report (e.g., *7-years-old child*). It contains mainly demographic information but could also list inclusion criteria of a study or a condition for an outcome of an investigation. Mentioning of sicknesses are excluded and annotated as comorbidity, indication, or medical history / condition. | 237 | 2.37% |
| **Sum** | | **9989** | **100.00%** |

In total, 18 different biomedical and pharmaceutical entities (e.g., drug, dose, adverse event, indication, comorbidity, intended use, administration route) were manually annotated and complemented in all records.

The initial dataset comprised in total 1400 records with 2622 sentences, 9989 entity occurrences, and 6185 occurrences of one or more entities on record level. The number of records with scientific language was 790, with informal ('layman') language was 610.

Records were randomly selected to integrate different language types from external and internal data sources. However, it is possible to train and validate a model only with publicly available data. Publicly available data can be found, for example, in: H. Gurulingappa et al.: Development of a benchmark corpus to support the automatic extraction of drug-related adverse effects from medical case reports, Journal of biomedical informatics, 2012, 45(5), 885-892; J. Dietrich, et al.: Adverse events in twitter-development of a benchmark reference dataset: results from IMI WEB-RADR, Drug safety, 2020, 43(5), 467-478; S. Karimi et al.: Cadec: A corpus of adverse drug event annotations. Journal of biomedical informatics, 2015, 55, 73-81; A. Sarker et al.: Data and systems for medication-related text classification and concept normalization from Twitter: insights from the Social Media Mining for Health (SMM4H)-2017 shared task, Journal of the American Medical Informatics Association, 2018, 25(10), 1274-1283).

A pretrained T5 transformer was used as machine learning model (C. Raffel, et al.: Exploring the limits of transfer learning with a unified text-to-text transformer, J. Mach. Learn. Res., 2020, 21(140), 1-67).

Pre-trained T5 models are available in different versions. The "T5-Base" architecture with 220 million parameters was used in the present examples.

Datasets used underwent an 80:20 split, i.e., copies of the machine learning model were trained on 80% of the data and validated using the remaining 20% of the data by comparing the model predictions with the actual annotations made by the annotation team. In case of 5-fold-cross-validation in total five subsequent non-overlapping validation datasets were selected to validate the complete dataset and the remaining 80% of data was used as training dataset. A stratification on source and entity was applied on validation and training data.

The max sequence length was set to 256. The learning rate was set to 1e-4, batch size was set to 4, and the epoch was set to 3, Adam optimizer with weight decay was used.

Evaluation was executed entity type and based on per positive class values of precision, recall and F-score metrics.

A fractional stratified 5-fold cross validation was introduced to investigate a) the entity peak- and cutoff performance and b) whether data is sufficient for entity prediction:

The complete trainings dataset was split into five stratified 20%-folds and for each run a 20%-fold as validation dataset was selected. The remaining 20%-folds were used for the creation of 20 percent, 40 percent, 60 percent, and 80 percent training sets, i.e., one cross-validation fold contains about 20% of entity occurrences (see Table 1). It was ensured that all validation and training data was stratified on entities and sources equally. Per 20% validation dataset four 20%, two 40 %, two 60 %, and one 80% training folds were created. This procedure was repeated five times to use all data for validation (n=45). With all individual training sets, T5 models were fine-tuned and evaluated. In one experiment the validation and training folds were decreased to 10 % and the 10% data point for AE (additional nine 10% folds in 10 runs, n=90) was determined.

In Table 2 results of all entities including median partial F1 values for the 20% and 80% training folds are listed.

**Table 2**

| Entity | Av 20% fold size | Median Partial F1 20% | Median Partial F1 80% |
|---|---|---|---|
| Action | 43 | 0.808 | 0.861 |
| Administration form / Primary packaging | 98 | 0.639 | 0.682 |
| Administration route | 33 | 0.602 | 0.684 |
| Adverse event (AE) | 320 | 0.620 | 0.638 |
| Comorbidity | 29 | 0.129 | 0.439 |
| Dose | 69 | 0.884 | 0.890 |
| Drug / Device | 301 | 0.908 | 0.937 |
| Indication | 157 | 0.796 | 0.814 |
| Intended effect | 90 | 0.820 | 0.844 |
| Medical history / condition | 10 | - | 0.133 |
| Method / Procedure / Administration | 80 | 0.500 | 0.536 |

(continued)

| Entity | Av 20% fold size | Median Partial F1 20% | Median Partial F1 80% |
|---|---|---|---|
| Outcome | 8 | 0.250 | 0.243 |
| Product Dose Combination (PDC) | 67 | 0.667 | 0.731 |
| Product Event Combination (PEC) | 284 | 0.495 | 0.557 |
| Product Indication Combination (PIC) | 216 | 0.209 | 0.370 |
| Product Technical Complaint (PTC) | 139 | 0.348 | 0.649 |
| Target parameter | 6 | 0.400 | 0.311 |
| Target population | 47 | 0.741 | 0.764 |

For some entities the average 20% fold size is small, e.g., for "Action" and "Dose", but results in high F1 scores. The peak performance level for "Dose" was already reached at 20% training data used (69 occurrences), while with regard to "Comorbidity", and "PTC" a higher peak level could be probably achieved with more data provided (see Fig. 3).

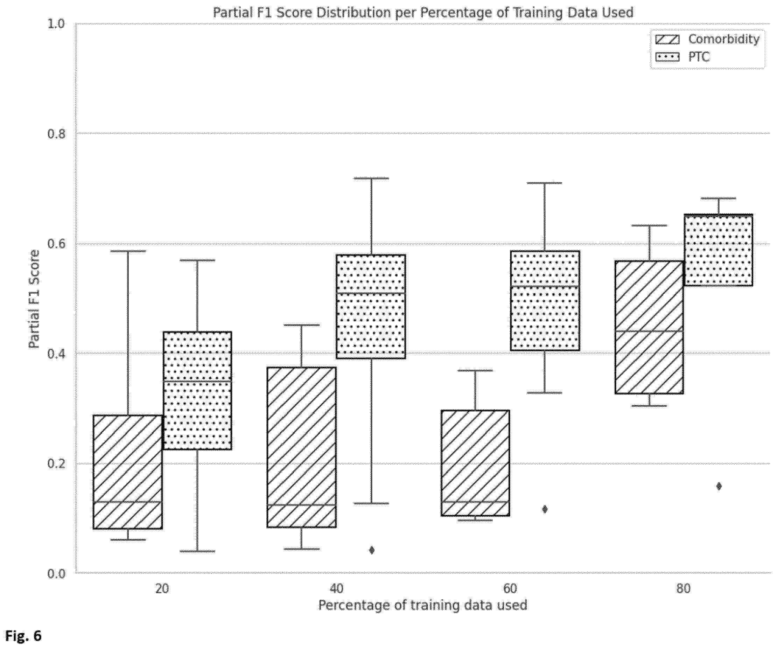

Fig. 6 shows the partial F1 score of different "Comorbidity" and "PTC" training data fractions in stratified 5-fold cross validation runs (each 20% fold consists of around 29 (Comorbidity) and 139 (PTC) occurrences, respectively).

Data provided for "Medical history / condition" are not sufficient at all. Interestingly that although "Indication and Drug / Device" have high F1 scores even with smaller training data, the combination of product and indication ("PIC") seems to be more difficult to predict compared to "PDC" or "PEC".

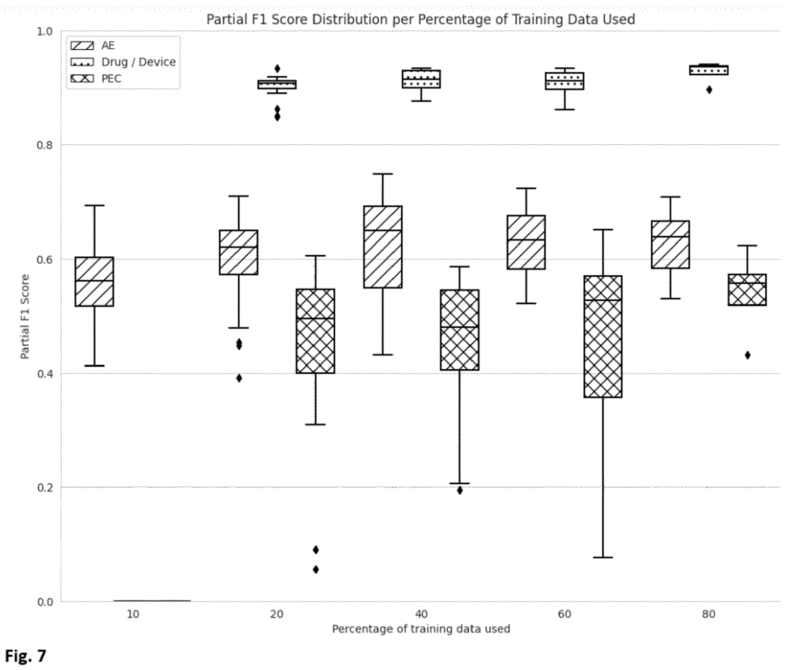

Fig. 7 shows the partial F1 score for "Drug", "AE", and "PEC" trained with fractions of the training dataset. The average numbers of all entity occurrences in the 20 % fold are similar. Since the "AE" partial F1 peak performance was already reached at 20% training data used (see Table 2), the validation and training folds were decreased to 10 % (fold size about 160 occurrences) and the partial F1 at 10 % determined (median: 0.560).

In another experiment fractional stratified k-fold cross-validation was investigated for a second (different) initial dataset with different annotation rules (ADE Corpus V2, see H. Gurulingappa et al.: Development of a benchmark corpus to support the automatic extraction of drug-related adverse effects from medical case reports, Journal of biomedical informatics, 2012, 45(5), 885-892).

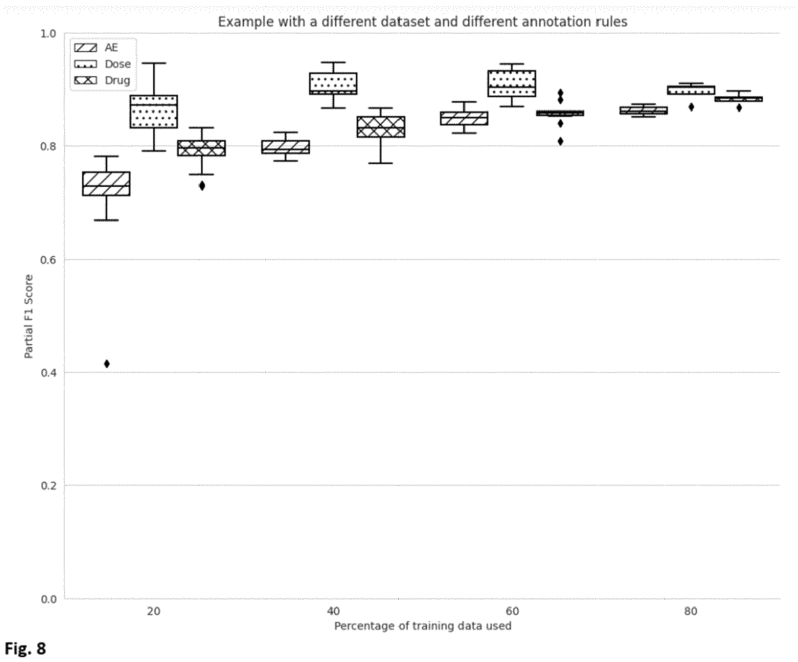

To allow comparison of the results with the first training data set, our dataset the number of occurrences was similar. Occurrences of AE (n=1604 of 5742) and Drug (n=1505 of 4927) were samples randomly. The complete amount of Dose data (n=230 of 230) was used. The 80:20 split was executed on the selected data. The results are shown in Fig. 8 and Table 3.

**Table 3**

| Entity | Avg 20% fold size | Median Partial F1 20% training data | Median Partial F1 80% training data |
|---|---|---|---|
| AE | 320 | 0.728 | 0.861 |
| Dose | 46 | 0.872 | 0.903 |
| Drug | 301 | 0.797 | 0.885 |

Fig. 8 shows boxplots of partial F1 score of different AE, Dose, Drug training data fractions from ADE Corpus in stratified 5-fold cross validation runs (20% fold, AE: around 320, Drug Device: 301, Dose: 46 occurrences).

The results in Table 3 and Fig. 8 show that the invention can be carried out with different data sets annotated according to different rules. Likewise, the invention can be executed with different machine learning models and different training tasks.

**Claims**

1. A computer-implemented method comprising the steps:

    - receiving and/or providing a machine learning model,
    - receiving and/or providing an initial dataset for training and validating the machine learning model, the initial dataset comprising a number $M$ of records, each record of at least a portion of the number of records being related to one or more aspects of a number *N* of aspects, wherein for each aspect $A_i$ there is a relative frequency $f_i$ indicating how often the aspect is represented in the dataset, wherein i is an index that runs through the integers from 1 to *N*,
- generating one or more sets of training data and validation data from the initial dataset, wherein each aspect is represented in each set with the same relative frequency as in the initial dataset,
- training a number of copies of the machine learning model on fractions of different sizes of the one or more training data sets, wherein each aspect is represented in each fraction with the same relative frequency as in the initial dataset,
- determining performance of each copy of the machine learning model, optionally with respect to a selected aspect,
- if the performance of the copies of the machine learning model reaches saturation with increasing size of the fractions: outputting a message that the initial dataset is sufficient to train the machine learning model,
or

> if the performance of the copies of the machine learning model does not reach saturation with increasing size of the fractions: outputting a message that the initial dataset is insufficient to train the machine learning model,
> and/or
> outputting the performance of the copies as a function of the size of fractions.

2. The method of claim 1, wherein generating one or more sets of training data and validation data comprises:

  - dividing the initial dataset into *k* folds, wherein each aspect is represented in each fold with the same relative frequency as in the initial dataset.

3. The method of claim 2, wherein copies of the machine learning model are trained on a number *p* of training folds and validated on a number *q* of validation folds, wherein $q \leq p < k,$ and $(p+q) \leq k.$

4. The method of claim 1, wherein the relative frequency $f_i$ is calculated according to the following equation:

$$f_i = \frac{F_i}{M}$$

wherein $F_i$ is either the number of records representing the aspect $A_i$, or the number of occurrences of the aspect $A_i$ in all records of the initial dataset.

5. The method of any one of claims 1 to 4, wherein the machine learning model is a classification model that is configured to classify each record into one of at least two classes, wherein each class of at least some of the classes represents an aspect.

6. The method of any one of claims 1 to 5, wherein the machine learning model is an entity recognition model which is configured to recognize one or more entities in a text file.

7. The method of any one of claims 1 to 6, wherein determining performance comprises determining a performance value, the performance value quantifying the quality of the model in performing a task based on record representing one or more aspects.

8. The method of claim 7, wherein the performance value is an *F*-score, preferably an *F*1-score.

9. The method of any one of claims 1 to 8, wherein the machine learning model is a transformer-based bidirectional encoder language model, preferably a text-to-text transfer transformer.

10. The method of any one of claims 1 to 8, wherein each record of at least a part of the records is a text file with medical content.

11. The method of any one of claims 1 to 9, wherein the one or more aspects represent one or more entities in text files, wherein the one or more entities is/are selected from the following list of entities: action, administration form, primary packaging, administration route, adverse event, comorbidity, dose, drug, device, indication, intended effect, medical history, medical condition, administration method / procedure, outcome, product dose combination, product event combination, product indication combination, product technical complaint, target parameter, target population.

**12.** The method of any one of claims 1 to 11, further comprising:

- receiving and/or providing further data and training and validating one or more copies of the machine learning model with further data until the performance of the machine learning model no longer increases with increasing amount of further data.

**13.** The method of any one of claims 1 to 21, further comprising:

- using the trained machine learning model for prediction.

**14.** The method of claim 13, wherein using the trained machine learning model comprises:

- inputting a new record into the trained machine learning model,
- receiving an output from the machine learning model,
- outputting the output.

**15.** The method of any one of claims 1 to 14, the method comprising:

- receiving and/or providing a machine learning model, wherein the machine learning model is a transformer-based bidirectional encoder language model,
- receiving and/or providing an initial dataset for training and validating the machine learning model, the initial dataset comprising a number $M$ of records, each record representing one or more entities of a number $N$ of entities, wherein for each entity $E_i$ there is a relative frequency $f_i = F_i/M$ indicating how often the entity is represented in the initial dataset, where $F_i$ indicates

  ∘ the number of records representing the entity $E_i$, or
  ∘ the number of occurrences of the entity in the training data,
  wherein i is an index that runs through the integers from 1 to $N$,
  wherein each record is a text file with medical content,
  wherein each entity is or describes a medical aspect,

- dividing the initial dataset into $k$ folds, where each entity is represented in each fold with the same relative frequency as in the initial dataset,
- training and validating copies of the machine learning model in a number of training and validation runs i) based on all $k$ folds in each training run and ii) on one or more fractions of the $k$ folds in each training run, wherein each aspect being represented in each fraction with the same relative frequency as in the initial dataset,
- determining performance of each copy of the model with respect to a selected entity,
- determining if the performance of the copies of the machine learning model reaches saturation with increasing size of the fractions and outputting a message about the saturation, and/or outputting the performance of the copies as a function of the size of fractions,
- receiving and/or providing further data and training the machine learning model with further training data until the performance of the machine learning model no longer increases with increasing amount of training data,
- inputting a new record into the trained machine learning model,
- receiving an output from the machine learning model, wherein the output indicates for one or more selected entities, whether the new record represents the one or more selected entities,
- outputting the output.

**16.** A computer system comprising:

a processor; and
a memory storing an application program configured to perform, when executed by the processor, an operation, the operation comprising:

- receiving and/or providing a machine learning model,

- receiving and/or providing an initial dataset for training and validating the machine learning model, the initial dataset comprising a number $M$ of records, each record of at least a portion of the number of records being related to one or more aspects of a number $N$ of aspects, wherein for each aspect $A_i$ there is a relative frequency $f_i$ indicating how often the aspect is represented in the initial dataset, wherein i is an index that runs through the integers from 1 to $N$,

- generating one or more sets of training data and validation data from the initial dataset, wherein each aspect is represented in each set with the same relative frequency as in the initial dataset,

- training a number of copies of the machine learning model on fractions of different sizes of the one or more training data sets, wherein each aspect is represented in each fraction with the same relative frequency as in the initial dataset,

- determining performance of each copy of the machine learning model, optionally with respect to a selected aspect,

- determining if the performance of the copies of the machine learning model reaches saturation with increasing size of the fractions and outputting a message about the saturation, and/or outputting the performance of the copies as a function of the size of fractions.

17. A non-transitory computer readable storage medium having stored thereon software instructions that, when executed by a processor of a computer system, cause the computer system to execute the following steps:

- receiving and/or providing a machine learning model,

- receiving and/or providing an initial dataset for training and validating the machine learning model, the initial dataset comprising a number $M$ of records, each record of at least a portion of the number of records being related to one or more aspects of a number $N$ of aspects, wherein for each aspect $A_i$ there is a relative frequency $f_i$ indicating how often the aspect is represented in the initial dataset, wherein i is an index that runs through the integers from 1 to $N$,

- generating one or more sets of training data and validation data from the initial dataset, wherein each aspect is represented in each set with the same relative frequency as in the initial dataset,

- training a number of copies of the machine learning model on fractions of different sizes of the one or more training data sets, wherein each aspect is represented in each fraction with the same relative frequency as in the initial dataset,

- determining performance of each copy of the machine learning model, optionally with respect to a selected aspect,

- determining if the performance of the copies of the machine learning model reaches saturation with increasing size of the fractions and outputting a message about the saturation, and/or outputting the performance of the copies as a function of the size of fractions.

**(a)**

$R_1, R_2, ..., R_M$

$A_1, A_2, ..., A_N$

$F_i$

$A_1 A_2 \quad ... \quad A_N$

IDS

**(b)** $M = 100, N = 4$

|        | $A_1$ | $A_2$ | $A_3$ | $A_4$ |
|--------|-------|-------|-------|-------|
| $F_i$  | 20    | 80    | 20    | 40    |
| $f_i = F_i/M$ | 0.2 | 0.8 | 0.2 | 0.4 |

Fig. 1

IDS

#1

| T | T | T | T | V |
|---|---|---|---|---|

80%     20%

#2

| T | T | T | V | T |
|---|---|---|---|---|

#3

| T | T | V | T | T |
|---|---|---|---|---|

#4

| T | V | T | T | T |
|---|---|---|---|---|

#5

| V | T | T | T | T |
|---|---|---|---|---|

20% V     80% T

Fig. 2

18

Fig. 3(a)

Fig. 3(b)

IDS

| | | | | |
|---|---|---|---|---|
| #1 | T | T | T | | V |
| | $FD_1$ | $FD_2$ | $FD_3$ | $FD_4$ | $FD_5$ |

| | | | | |
|---|---|---|---|---|
| #2 | | T | T | T | V |
| | $FD_1$ | $FD_2$ | $FD_3$ | $FD_4$ | $FD_5$ |

| | | | | |
|---|---|---|---|---|
| #3 | T | | T | T | V |
| | $FD_1$ | $FD_2$ | $FD_3$ | $FD_4$ | $FD_5$ |

| | | | | |
|---|---|---|---|---|
| #4 | T | T | | T | V |
| | $FD_1$ | $FD_2$ | $FD_3$ | $FD_4$ | $FD_5$ |

**Fig. 3(c)**

(110)
(120)
(130)
(140)
(150)
(160)

(100)

**Fig. 4**

Fig. 5

Fig. 6

Partial F1 Score Distribution per Percentage of Training Data Used

Fig. 7

Example with a different dataset and different annotation rules

Fig. 8

Europäisches
Patentamt
European
Patent Office
Office européen
des brevets

# EUROPEAN SEARCH REPORT

Application Number

EP 22 21 0758

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Unknown: "scikit-learn user guide Release 0.23.2", , 4 August 2020 (2020-08-04), pages 1-2754, XP93039699, Retrieved from the Internet: URL:https://scikit-learn.org/0.23//_downloads/scikit-learn-docs.pdf * page 2350 * * page 2318 * * page 1435 - page 1437 * ----- | 1-17 | INV. G06N3/0455 G06N3/088 G06N3/096 G06F40/30 |
| A | MARTIN KRALLINGER ET AL: "The CHEMDNER corpus of chemicals and drugs and its annotation principles", JOURNAL OF CHEMINFORMATICS, BIOMED CENTRAL LTD, LONDON, UK, vol. 7, no. Suppl 1, 19 January 2015 (2015-01-19), page S2, XP021209397, ISSN: 1758-2946, DOI: 10.1186/1758-2946-7-S1-S2 * abstract * ----- | 6,9-11 | |
| A,D | JINHYUK LEE ET AL: "BioBERT: a pre-trained biomedical language representation model for biomedical text mining", ARXIV.ORG, CORNELL UNIVERSITY LIBRARY, 201 OLIN LIBRARY CORNELL UNIVERSITY ITHACA, NY 14853, 25 January 2019 (2019-01-25), XP081498888, DOI: 10.1093/BIOINFORMATICS/BTZ682 * table 6 * * Section 3.1; Section 5 * ----- | 6-11 | TECHNICAL FIELDS SEARCHED (IPC) G06N G06F |

The present search report has been drawn up for all claims

| Place of search | Date of completion of the search | Examiner |
|---|---|---|
| The Hague | 8 May 2023 | Mariani, Giovanni |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. KOROTEEV.** BERT: A Review of Applications in Natural Language Processing and Understanding. *arXiv:2103.1194,* 2021
- **K. HUANG et al.** ClinicalBERT: Modeling Clinical Notes and Predicting Hospital Readmission. *arXiv: 1904.05342,* 2020
- **J. LEE et al.** BioBERT: a pre-trained biomedical language representation model for biomedical text mining. *arXiv:1901.08746,* 2019
- **C. RAFFEL et al.** Exploring the limits of transfer learning with a unified text-to-text transformer. *J. Mach. Learn. Res.,* 2020, vol. 21 (140), 1-67
- **N. DIAMANTIDIS et al.** Unsupervised stratification of cross-validation for accuracy estimation. *Artificial Intelligence,* 2000, vol. 116 (1-2), 1-16
- **H. GURULINGAPPA et al.** Development of a benchmark corpus to support the automatic extraction of drug-related adverse effects from medical case reports. *Journal of biomedical informatics,* 2012, vol. 45 (5), 885-892
- **J. DIETRICH et al.** Adverse events in twitter-development of a benchmark reference dataset: results from IMI WEB-RADR. *Drug safety,* 2020, vol. 43 (5), 467-478
- **S. KARIMI et al.** Cadec: A corpus of adverse drug event annotations. *Journal of biomedical informatics,* 2015, vol. 55, 73-81
- **A. SARKER et al.** Data and systems for medication-related text classification and concept normalization from Twitter: insights from the Social Media Mining for Health (SMM4H)-2017 shared task. *Journal of the American Medical Informatics Association,* 2018, vol. 25 (10), 1274-1283